# EUROPEAN PATENT APPLICATION

(11) **EP 2 165 878 A1**
(43) Date of publication of application: **24.03.2010**
(21) Application number: 09165866.6
(22) Date of filing: 20.07.2009
(51) Int. Cl.: B60P 1/16, F15B 11/028

(54) **A directional control device for hydraulic circuits**

(30) Priority: 23.09.2008 IT MO20080243
(71) Applicant: Interpump Hydraulics S.p.A., 41015 Nonantola (MO) (IT)
(72) Inventor: Landuzzi, Daniele, 40010 Bentivoglio(Bologna) (IT)
(74) Representative: Colò, Chiara

(57) **Abstract**

A distribution device for hydraulic circuits, comprises a main containing body (2) having at least a fluid inlet mouth (4) connected to a pump (P), a fluid outlet mouth (5) connectable to an actuator organ (C) and a fluid discharge mouth (6) associable to a discharge tank (7); a cursor (3) slidably inserted in the main body (2) and selectively mobile between at least a first position in which it allows passage of fluid from the pump (P) to the actuator organ (C) through the inlet mouth (4) in order to activate the actuator organ (C) and a second position in which it allows transit of the fluid from the pump (P) to the discharge tank (7) in order to halt the actuator organ (C); means for controlling (8) associated to the actuator organ (C) for detecting a pressure of the fluid acting in the actuator organ (C) and active on the cursor (2) in order to move it from the first position to the second position when a predetermined value of pressure of the fluid acting in the actuator organ (C) is exceeded.

## Description

The invention relates to a distribution device for hydraulic circuits.

In particular, the invention is applicable in moving tiltable containers of motor trucks activated by single- or double-acting hydraulic cylinders.

Distribution devices of known type comprise a main body and a cursor slidably inserted in the main body. The main body affords an oil inlet mouth connected to a hydraulic pump and at least a switch for realising a hydraulic connection with the cylinder, if the cylinder is a single-acting cylinder.

On the contrary, a further switch is afforded in the main body for connecting the device to the cylinder if it is a double-acting cylinder.

Further afforded in the main body of the distribution device is an outlet mouth for enabling discharge of the oil into a discharge tank.

The cursor is mobile with respect to the main body such as to enable a fluid communication between the oil inlet mouth and the switches and/or the outlet mouth for realising a desired function.

In greater detail, the distribution device, or distributor, is a three-way distributor and the cursor is positionable such that the distribution device can alternatively assume at least a first and a second configuration.

In the first configuration, the cursor is positioned, with respect to the main body, such as to enable a passage of the pressurised oil from the inlet mouth to the switch and thus to the hydraulic cylinder. In this configuration, then, the hydraulic cylinder is supplied and activated such that a stem thereof extends.

In the second configuration, the cursor is positioned, with respect to the main body, such as to enable a passage of the pressurised oil from the inlet mouth to the outlet mouth. In this case, the pressurised oil is made to flow out into the discharge tank, the pump is no longer in fluid communication with the cylinder and the cylinder is deactivated.

As is well known, when the cylinder reaches stem endrun, since the pump continues to keep the oil in a pressurised state, there is a rapid increase in the oil pressure in the hydraulic cylinder and the distribution device.

The peak reached is potentially dangerous and must be rapidly and effectively removed from the circuit.

Thus it is necessary to provide the distribution devices with special security means. In the prior art, the means are constituted by maximum pressure valves which are arranged between the distribution device and the hydraulic cylinder and which open when a predetermined pressure threshold is exceeded. These valves, once open, transfer the pressurised oil into the discharge tank to eliminate the oil pressure hike in the distributor and the hydraulic cylinder.

In prior-art distribution device the use of maximum pressure valves disadvantageously does not guarantee adequate protection of the hydraulic circuit.

The maximum pressure valves must be suitably calibrated according to the various applications of the device. In the case in point, the calibration of the valves depends, by way of example, on the type of hydraulic cylinder and the power required for making the pump function.

Further, the maximum pressure valves normally used are not able to deal with high oil flow rates. Consequently the response to the pressure peak is not completely satisfactory.

In this context, the technical aim underlying the present invention is to provide a distribution device for hydraulic circuits which obviates the drawbacks of the above-cited prior art.

In particular, an aim of the present invention is to provide a distribution device for hydraulic circuits which is able to guarantee adequate protection of the hydraulic circuit to which it is applied.

The set technical objective and the specified aim are substantially attained by a distribution device for hydraulic circuits, comprising the technical characteristics set out in one or more of the accompanying claims.

Further characteristics and advantages of the present invention will better emerge from the following non-limiting description of a preferred but not exclusive embodiment of a distribution device for hydraulic circuits, as illustrated in the accompanying figures of the drawings, in which:
figure 1 is a schematic view of a hydraulic circuit comprising a single-acting distribution device for hydraulic circuits according to a first embodiment of the present invention;
figure 2 is a schematic view of a hydraulic circuit comprising a distribution device for double-acting hydraulic circuits according to a first embodiment of the present invention;
figure 3 is a section view of a detail of a distribution device according to the present invention in a first configuration corresponding to the cylinder supply;
figure 4 is a section view of a detail of a distribution device according to the present invention in a second configuration corresponding to the discharge following a reaching of a maximum permitted pressure or pressure peak.

In accordance with the accompanying figures, 1 denotes in its entirety a distribution device for hydraulic circuits.

In greater detail, the figures illustrate a hydraulic circuit applied, by way of example, to motor trucks and, in particular, to a tiltable container of motor trucks, for moving the container.

The illustrated circuit comprises a hydraulic pump P which enables circulation of a fluid, preferably oil. The pump P is activated by the mechanical power dispensed from a power take-off of the motor truck.

The pump P is connected to the distribution device 1 by means of special conduits (schematically represented).

The device 1 further comprises an actuator organ C supplied by the oil coming from the pump P. The actuator C is preferably a hydraulic cylinder.

The device 1 is arranged between the pump P and the cylinder C such as to regulate activation and/or deactivation of the cylinder C.

With reference to the hydraulic cylinder C, it can be single-acting or double-acting.

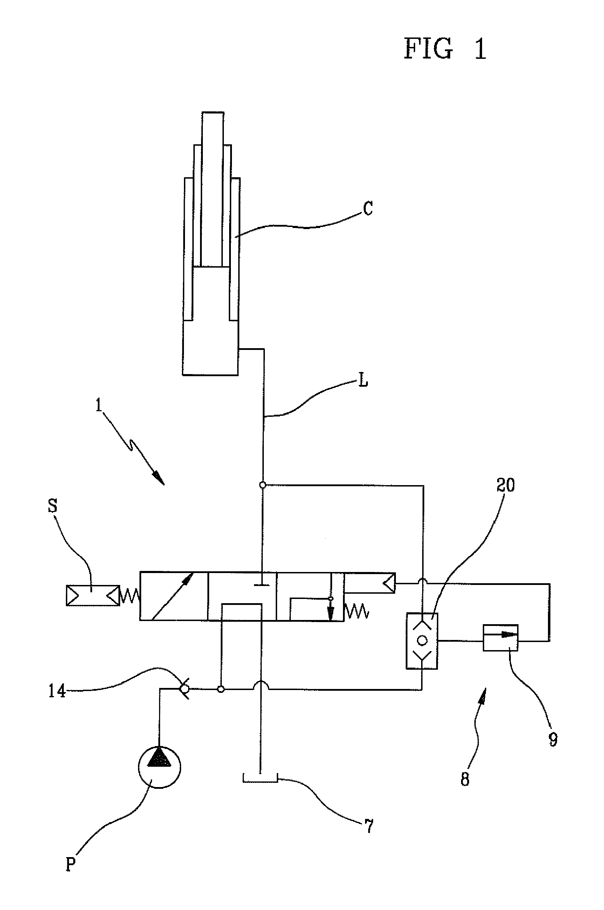

In the ambit of the present illustration, by single-acting is meant a hydraulic cylinder supplied by a single hydraulic supply line L which brings pressurised oil to a bottom of the cylinder in order to activate extension of a stem. This is the case which is schematically illustrated in figure 1.

In this case, the inversion of motion and thus the retraction of the stem cannot be commanded and is achieved by simple outflow of the oil present in the cylinder bottom.

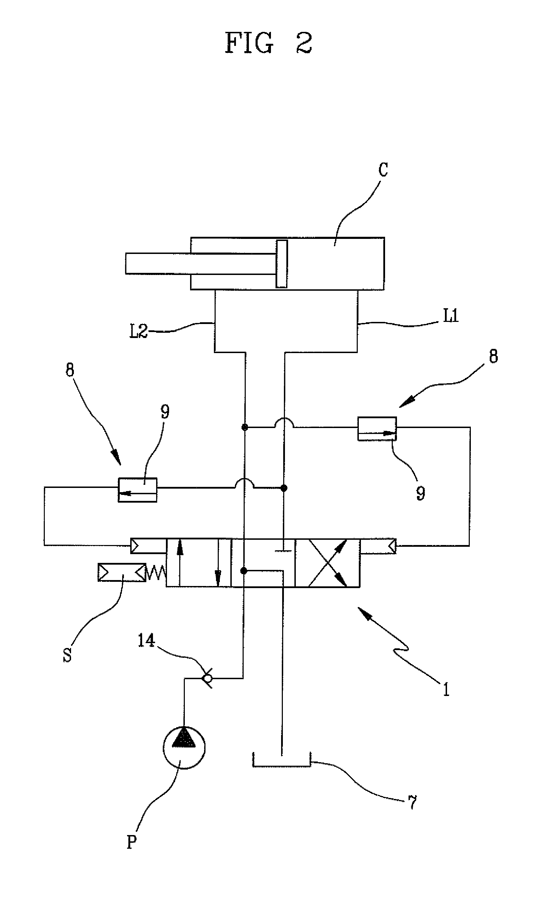

By double-acting is meant a hydraulic cylinder supplied by a supply line L1 directed to the bottom in order to extend the stem and a supply line L2 directed to the stem to activate retraction thereof. This is the case schematically illustrated in figure 2.

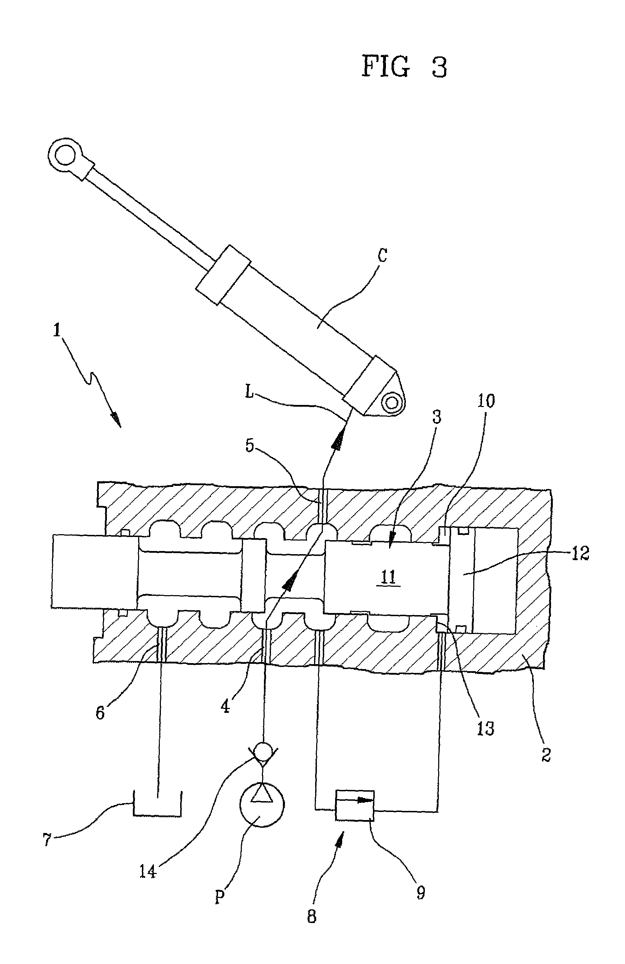

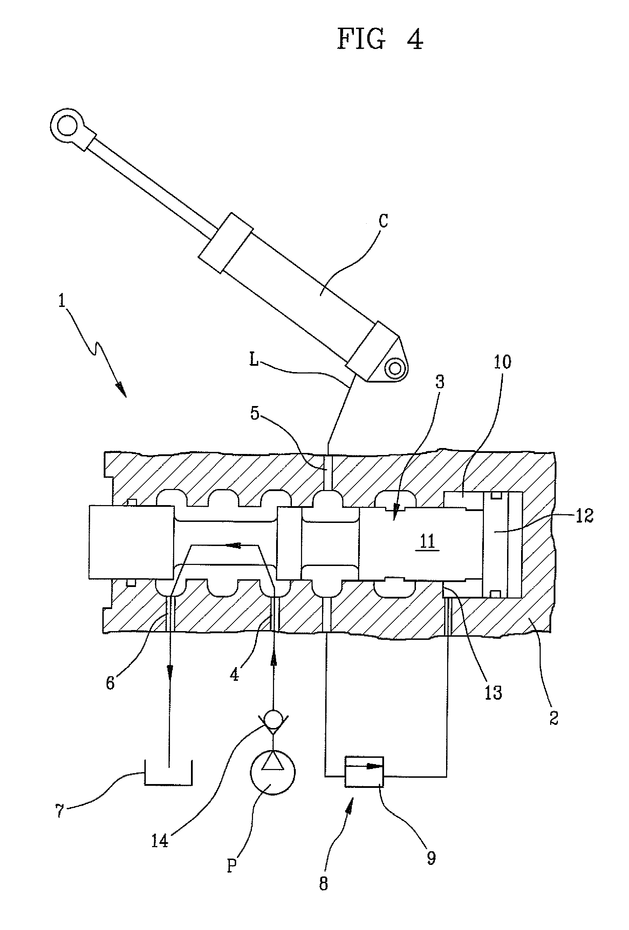

With reference to figures 3 and 4, the device 1 comprises a main containing body 2 and a cursor 3 slidably inserted in the main body 2.

The main body 2 exhibits an inlet mouth 4 which is necessary for realising the connection of the device 1 with the hydraulic pump P and at least an outlet mouth 5 for enabling connection of the device 1 with the cylinder C.

In a case where the cylinder C is single-acting the outlet mouth 5 enables connection of the device 1 with the bottom of the cylinder C and the connection is sufficient to enable functioning.

In a case where the cylinder C is double-acting, the main body 2 also exhibits a further outlet mouth which realises the connection of the device 1 with the cylinder C in proximity of the stem.

In greater detail, in a case in which the cylinder C is a single-acting cylinder, the oil flows to the cylinder C through the outlet mouth 5 during extraction of the stem and flows from the cylinder C once more through he outlet mouth 5 during retraction of the stem.

If the cylinder C is a double-acting cylinder, during extraction of the stem the oil flows towards the bottom of the cylinder C through the outlet mouth 5 and exits from the stem side of the cylinder C through the further outlet mouth. On the contrary, during retraction of the stem, the oil flows towards the side of the stem of the cylinder C via the further outlet mouth and exits from the bottom of the stem of the cylinder C through the outlet mouth 5.

In any case, the main body 2 further exhibits a discharge mouth 6 which enables, for example, evacuation of the oil flowing from the cylinder C towards a discharge tank 7.

In the device 1, the cursor 3 of the three-way distribution device is selectively mobile between at least a first position in which it enables a fluid communication between the inlet mouth 4 and the outlet mouth 5 and a second position in which it establishes a fluid communication between the inlet mouth 4 and the discharge mouth 6.

In greater detail, in the first position the cursor 3 enables the pressurised oil to go from the pump P to the cylinder C such as to activate the cylinder C by extracting the stem thereof.

In the second position, the cursor 2 enables the pressurised oil to pass from the pump P to the tank 7. As in this position the cursor 3 prevents a fluid communication between the device 1 and the cylinder C, the supply to the cylinder C is interrupted.

The cursor 3 is further preferably able to assume a third position in which it enables inversion of the motion of the stem in order to retract it.

In a case in which the cylinder C is single-acting, in the third position the cursor 3 sets the outlet mouth 5 in communication with the discharge mouth 6 and the oil can flow out from the cylinder C to the tank 7.

If, on the other hand, the cylinder C is double-acting, in the third position the cursor 3 sets the outlet mouth 5 in communication with the discharge mouth 6 and the inlet mouth 4 in communication with the further outlet mouth. In this way, the oil in the bottom side of the cylinder C flows into the discharge tank 7, while the oil coming from the pump P flows to the stem side of the cylinder C.

In any case, the cursor 3 is moved by a user directly via a mechanical connection or, alternatively, by a servo-assisted command S.

When the cursor 3 is in the second position, it preferably occupies a central position with respect to the main body 2. On the other hand, when the cursor 3 is in the first and/or the third position, it occupies a lateral position with respect to the central position defined above.

With reference to a single-acting cylinder C, the distribution device 1 is a three-way and three-position device. With reference to the double-acting cylinder C, the device is a four-way and three-position device.

The device 1 further comprises means for controlling 8 the pressure required to protect the device 1 and the whole hydraulic circuit from any pressure peaks.

The means for controlling 8 are associated to the cylinder C in order to detect the oil pressure contained therein and act on the cursor 3 to move it from the work position to the discharge position when the oil pressure acting in the cylinder C exceeds a predetermined value.

In the present invention, the means for controlling 8 comprise a control valve 9 located in fluid communication with the pump P or with the cylinder C.

In the realisation of figure 1, the communication is achieved via a selector valve 20.

In use, when the pressure of the oil acting in the cylinder C or at the mouth of the pump P exceeds the predetermined value the control valve 9 switches its configuration such as to enable, through the control valve 9, a transit of oil which reaches the cursor 3 and moves it.

When the detected pressure is lower than the predetermined value, the control valve 9 intercepts the flow of pressurised oil.

In detail, in the preferred embodiment relating to the single-acting cylinder C, as the device 1 is connected to the cylinder by means of a single supply line L, the device 1 comprises a single control valve 9 relative to the supply line.

In a case where the cylinder C is a double-acting cylinder, the device 1 comprises two control valves 9, each associated to a respective supply line L1, L2.

As the oil pressure acting in the cylinder C is the same as the oil pressure acting at the outlet mouth 5, the control valve 9 is in fluid communication with the outlet mouth 5 and there is no need to have direct contact with the cylinder C.

In the case of the double-acting cylinder C, one of the control valves 9 is in fluid communication with the further outlet mouth.

As mentioned herein above, on exceeding the predetermined pressure value, the control valve 9 enables passage of pressurised oil towards the cursor 3.

More precisely, in this situation the oil is directed to a variable-volume chamber 10.

The chamber 10 is defined between the main body 2 and the cursor 3 and is in fluid communication with the valve 9.

The cursor 3 comprises a cylindrical body 11 which extends along a prevalent longitudinal development axis and a disc 12 fitted to an end of the cylindrical body 11. The disc 12 exhibits a greater diameter than the diameter of the cylindrical body itself and lies facing an internal abutment 13 afforded in the main body 2.

The variable-volume chamber 10 thus defined between the disc 12 and the abutment 13 exhibits an annular shape wound about the prevalent longitudinal development axis.

The disc 12 is thus mobile in nearing and distancing to and from the abutment 13 in order to vary the volume of the chamber 10.

In use, when the control valve 9 opens, the pressurised oil enters the chamber 10 which is in a minimum volume configuration. The inlet of the pressurised oil causes an extension of the chamber 10 which, on increasing its volume, moves the disc 12 and thus also the rest of the cursor 3. In this way the cursor 3 is displaced from the first position (or from the third position) to the second position, deactivating supply to the cylinder C.

In the case in which the cylinder C is a double-acting cylinder, the device 1 exhibits two variable-volume chambers 10 located at respective ends of the cursor 3.

In this case, the cursor 3 comprises two discs 12 fixed to respective ends of the cylindrical body 11 and two corresponding internal abutments 13 for defining the chambers 10.

A check valve 14 can advantageously be predisposed immediately downstream of the pump P.

The invention attains the set aim and provides important advantages.

The control valve does not require modifications to its calibration parameters according to the various possible applications. In other words, once the calibration of the valve is fixed it is not necessary to intervene further in order to adapt the distribution device 1 to other and different requirements.

As can be seen in the case of the single-acting cylinder the control is active on both the pump P delivery and on the cylinder C, while with a double-acting cylinder the control is operated directly by two control valves.

Therefore the device 1 guarantees adequate protection of itself and of the hydraulic circuit to which it is applied independently of the particular operating conditions.

Further, the quantity of pressurised oil which can exit to relieve a pressure peak is considerable increased. Once the peak has been verified, the means for controlling cause the cursor to move into the second position thereof in order to enable the device to evacuate the excess pressure. In this case, the oil discharged via the device is considerably superior to the oil evacuated by a maximum pressure valve.

Among the advantages of the invention is one relating to compactness. The control valve can be located directly on the main body of the distribution device in order to increase the compactness of the device and reduce its size.

It is also possible to connect the distribution device direct flanging on the tank.

## Claims

1. A distribution device for hydraulic circuits, comprising
a main containing body (2) having at least a fluid inlet mouth (4) connected to a pump (P), a fluid outlet mouth (5) connectable to an actuator organ (C) and a fluid discharge mouth (6) associable to a discharge tank (7);
a cursor (3) slidably inserted in the main body (2) and selectively mobile between at least a first position in which it allows passage of fluid from the pump (P) to the actuator organ (C) through the inlet mouth (4) in order to activate the actuator organ (C) and a second position in which it allows transit of the fluid from the pump (P) to the discharge tank (7) in order to halt the actuator organ (C);
**characterised in that** it further comprises means for controlling (8) associated to the actuator organ (C) for detecting a pressure of the fluid acting in the actuator organ (C) and active on the cursor (2) in order to move it from the first position to the second position on exceeding a predetermined value of pressure of the fluid acting in the actuator organ (C).

2. The device of claim 1, **characterised in that** the means for controlling (8) comprise a control valve (9) in fluid communication with the actuator organ (C) for enabling fluid passage towards the cursor (3) when the fluid pressure acting in the actuator organ (C) is greater than the predetermined value for stopping the actuator organ (C).

3. The device of claim 2, **characterised in that** the control valve (C) is in fluid communication with the outlet mouth (5).

4. The device of claim 2 or 3, **characterised in that** it further exhibits at least a variable-volume chamber (10) defined between the main body (2) and the cursor (3); the variable-volume chamber (10) being in fluid communication with the control valve (9).

5. The device of claim 4, **characterised in that** the cursor (2) comprises a cylindrical body (11) and at least a disc (12) fixed to an end of the cylindrical body (11) and having a greater diameter than a diameter of the cylindrical body (11); the disc (12) facing an internal abutment (13) fashioned in the main body (2).

6. The device of any one of the preceding claims, **characterised in that** the main body (2) exhibits a further outlet mouth which is connectable to the actuator organ (C) and **in that** the cursor (3) is further positionable in order to assume a third position in which it enables fluid passage from the pump (P) to the actuator organ (P) through the further inlet mouth in order to invert an action of the actuator organ (C).

7. The device of claim 6, **characterised in that** the means for controlling (8) comprise two control valves (9), each in fluid communication, respectively with the outlet mouth (5) and the further outlet mouth; each control valve (9) enabling passage of fluid towards the cursor (3) when the fluid pressure acting in the actuator organ (C) is greater than the predetermined value for halting the actuator organ (C).

8. The device of claim 7, **characterised in that** it exhibits two variable-volume chambers (10) defined between the cursor (3) and the main body (2); each chamber (10) being in fluid communication with a respective control valve (9).

9. The device of any one of the preceding claims, **characterised in that** the actuator organ (C) is a hydraulic cylinder.

10. A hydraulic circuit, comprising:
a pump (P) for maintaining a fluid under pressure;
an actuator organ (C) functionally connected to the pump (P) in order to be supplied with the pressurised fluid;
a distribution device for hydraulic circuits (1) as in any one of claims from 1 to 9; the device being located between the pump (P) and the actuator organ (C) in order to regulate activation and/or deactivation of the actuator organ (C).
